# EUROPÄISCHE PATENTSCHRIFT

(11) **EP 4 359 162 B1**
(45) Veröffentlichungstag und Bekanntmachung des Hinweises auf die Patenterteilung: **24.12.2025**
(21) Anmeldenummer: 22735866.0
(22) Anmeldetag: 21.06.2022
(51) Int. Cl.: B23K 26/03, B23K 26/067, B23K 26/082, B23K 26/20, B23K 26/242, B23K 26/244, B23K 26/28, B23K 26/32, H01M 50/169, B23K 101/04, B23K 101/36, B23K 103/10

(54) **VERFAHREN ZUM MEHRFACHEN ABFAHREN EINER SCHWEISSKONTUR MIT MEHREREN LASERSPOTS**
METHOD FOR TRAVERSING A WELDING CONTOUR MULTIPLE TIMES USING MULTIPLE LASER SPOTS
PROCÉDÉ DE SUIVI MULTIPLE D'UN CONTOUR DE SOUDAGE AU MOYEN DE PLUSIEURS SPOTS LASER

(30) Priorität: 23.06.2021 DE 102021206488
(43) Veröffentlichungstag der Anmeldung: 01.05.2024
(73) Patentinhaber: TRUMPF Laser- und Systemtechnik SE, 71254 Ditzingen (DE)
(72) Erfinder: SCHEIBLE, Philipp, 71254 Ditzingen (DE); HAUG, Patrick, 70839 Gerlingen (DE)
(74) Vertreter: Trumpf Patentabteilung
(86) Internationale Anmeldenummer: PCT/EP2022/066904
(87) Internationale Veröffentlichungsnummer: WO 2022/268823

(56) Entgegenhaltungen:
- WO-A2-03/079464
- DE-A1- 102016 124 924
- DE-A1- 102019 210 019
- US-A1- 2012 298 638

## Beschreibung

Die Erfindung betrifft ein Verfahren zum Verschweißen von wenigstens zwei aluminiumhaltigen Bauteilen entsprechend dem Oberbegriff des Anspruchs 1.

Das eingangs genannte Verfahren ist aus der DE 10 2016 124 924 A1 bekannt geworden.

In der Elektromobilität müssen für zahlreiche Anwendungsfälle Bauteile gefügt werden, welche gegenüber verschiedenen Medien dicht ausgebildet sind. Typische Medien, gegenüber denen eine Mediendichtigkeit hergestellt werden muss, sind beispielsweise Kühlflüssigkeiten oder auch Schutzgase, um eine geeignete Atmosphäre für empfindliche Komponenten zu schaffen.

In der Elektromobilität sind, insbesondere aufgrund des geringen spezifischen Gewichts, Bauteile basierend auf Aluminiumwerkstoffen von großer Bedeutung. Um aluminiumhaltige Bauteile mediendicht zu fügen, wird bislang vorwiegend Löten eingesetzt. Beim Löten muss zum Erzeugen der Lötverbindung ein Lot zugeführt werden. Das Löten ist vergleichsweise aufwändig und schwierig; zudem können Lötverbindungen korrosionsanfällig sein. Weiterhin ist es möglich, aluminiumhaltige Bauteile miteinander zu verkleben, um diese mediendicht zu fügen. Auch das Kleben ist vergleichsweise aufwändig und erfordert oft lange Aushärtungsprozesse, und die Klebestelle kann gegenüber hohen Temperaturen empfindlich sein.

Schweißen ist ein Fügeverfahren, mit dem zwei Werkstücke dauerhaft miteinander verbunden werden können. Laserschweißen wird meist eingesetzt, wenn mit hoher Schweißgeschwindigkeit, schmaler und schlanker Schweißnahtform und mit geringem thermischem Verzug geschweißt werden soll. Beim Laserschweißen erfolgt die Energiezufuhr über einen Laserstrahl. Zur Erzielung einer hohen Schweißgeschwindigkeit erfolgt das Laserschweißen bevorzugt im Tiefschweißregime, wobei sich eine Dampfkapillare (Keyhole) im Bauteilmaterial ausbildet.

Das Laserschweißen von mediendichten Schweißnähten bei aluminiumhaltigen Bauteilen ist jedoch schwierig. Aluminiumhaltige Werkstücke neigen beim Laserschweißen zu starken Turbulenzen des Schmelzbades. Diese Turbulenzen führen zu einer ungleichmäßigen Erstarrung der Schweißnaht. Als Folge kann es zu Nahteinfällen, Randkerben oder Löchern bei der Schweißnaht kommen. Durch die zuvor genannten Probleme in Kombination mit Rissen und Poren an der Schweißnaht können Undichtigkeiten an der Schweißnaht entstehen, so dass die verschweißten Bauteile für Anwendungen, bei denen es auf Mediendichtheit ankommt, nicht geeignet sind. Außerdem kommt es durch die starken Turbulenzen des Schmelzbades beim Laserschweißen oft zu starker Bildung von Schweißspritzern, die die Umgebung verunreinigen und zu Materialverlust an der Schweißnaht führen.

Aus der DE 10 2010 003 750 A1 ist es bekannt, die Strahlprofilcharakteristik eines Laserstrahls mittels einer Mehrfachclad-Faser zu verändern. Hierbei kann ein Laserstrahl mit einem Kernanteil und einem Ringanteil erzeugt werden.

Aus der DE 10 2016 124 924 A1 ist eine Laserschweißvorrichtung bekannt geworden, die zum Verschweißen einer Dichtungsplatte auf einem Gehäusekörper einer

Batterie eingesetzt werden kann, wobei der Gehäusekörper und die Dichtungsplatte aus Aluminium gefertigt sind. Ein kollimierter Laserstrahl wird über eine Umformeinrichtung geleitet, die ein diffraktives optisches Element (DOE) mit einer Öffnung umfasst. Mit dem DOE kann ein einfallender Laserstrahl auf mehrere Teilstrahlen aufgeteilt werden, beispielsweise auf vier Teilstrahlen, die gemäß den Ecken eines Quadrats angeordnet sind. Je nach Überlapp des kollimierten Laserstrahls mit dem DOE oder seiner Öffnung wird ein Teil des kollimierten Laserstrahls mit dem DOE auf die Teilstrahlen aufgeteilt, oder bleibt beim Passieren der Öffnung unverformt.

Es hat sich mithin in der Praxis gezeigt, dass verschweißte aluminiumhaltige Bauteile oftmals Fehlstellen aufweisen und nicht mediendicht sind.

### Aufgabe der Erfindung

Es ist daher Aufgabe der Erfindung, ein Verfahren zur schnellen und gleichzeitig kostengünstigen Herstellung einer besonders zuverlässig mediendichten Schweißverbindung zu schaffen.

### Beschreibung der Erfindung

Diese Aufgabe wird erfindungsgemäß gelöst durch ein Verfahren gemäß Patentanspruch 1**.** Die abhängigen Patentansprüche geben bevorzugte Weiterbildungen wieder.

Die Aufgabe wird somit durch ein eingangs genanntes Verfahren gelöst, dadurch gekennzeichnet, dass der Ausgangslaserstrahl mittels einer Multifaser, insbesondere einer 2-in-1-Faser, erzeugt wird, sodass die mehreren Laserspots an der Oberfläche der Bauteile jeweils einen Kernanteil und einen Ringanteil aufweisen, wobei nach einem ersten Abfahren der Schweißkontur die Schweißkontur zumindest teilweise ein zweites Mal abgefahren wird.

Das zweite Abfahren dient als strategische Absicherung der Prozesssicherheit, indem eine bereits geschweißte Kontur wieder aufgeschmolzen wird. Erfahrungsgemäß ist zwar das erneute Aufschmelzen einer bereits geschweißten Kontur kontraproduktiv, da beim zweiten Abfahren einer Schweißkontur typischerweise mehr Fehler in die Schweißkontur eingebracht als beseitigt werden. Überraschenderweise hat sich jedoch gezeigt, dass die erfindungsgemäßen mehreren Laserspots zu einer Homogenisierung der Schweißkontur beim zweiten Abfahren führen. Eventuelle Poren und Löcher vom ersten Abfahren werden eliminiert, die Prozesssicherheit wird erhöht und eine mediendichte Schweißung kann bei hoher Prozessgeschwindigkeit (Schweißgeschwindigkeit) und geringer Taktzeit erzielt werden. Das erste Abfahren dient mithin dem Erreichen der nötigen Einschweißtiefe und somit der nötigen Festigkeit, wohingegen das zusätzliche zweite Überfahren dem Reparieren möglicher, materialbedingt unvermeidbarer Fehlstellen und dem Erzeugen einer mediendichten, insbesondere gasdichten, Schweißkontur dient.

Die Erfindung schlägt vor, zum Verschweißen von aluminiumhaltigen Bauteilen einen Ausgangslaserstrahl auf mehrere Teilstrahlen und entsprechend mehrere Laserspots auf der Werkstückoberfläche aufzuteilen. Zumindest ein Teil der Laserspots (meist alle Laserspots oder alle Laserspots bis auf einen Laserspot) sind an der Werkstückoberfläche in einer Ringformation angeordnet. Zudem ist eine Strahlformung des Ausgangslaserstrahls mit einer Multifaser, bevorzugt einer 2-in-1-Faser, vorgesehen, durch die im Ausgangslaserstrahl und in den Teilstrahlen, und damit in den einzelnen Laserspots, jeweils eine Aufteilung der Laserleistung auf einen Kernanteil mit höherer Leistungsdichte und einen Ringanteil mit niedrigerer Leistungsdichte erfolgt (im Falle der 2-in-1-Faser als "2-in-1-Technik" bezeichnet). Die Multifaser umfasst eine zentrale Kernfaser und eine oder mehrere Ringfasern, die die Kernfaser ringförmig umgeben. Aus der Kernfaser resultiert der Kernanteil, und aus der einen oder den mehreren Ringfasern resultiert der Ringanteil (im Falle mehrerer Ringfasern umfasst der Ringanteil dabei mehrere Einzelringanteile, die insgesamt dann den Ringanteil bilden). Durch die Gesamtheit dieser Maßnahmen ist es erfindungsgemäß möglich, ein qualitativ hochwertiges Laserschweißen von aluminiumhaltigen Bauteilen zu erreichen, und insbesondere eine porenarme und mediendichte Schweißnaht zu erhalten.

Bei Verwendung eines einzelnen Laserspots (Single Spot) führt bei aluminiumhaltigen Bauteilen die 2-in-1-Technik zwar zu einer gewissen Reduktion der Spritzerbildung im Vergleich zur Single-Spot-Technik mit herkömmlichem (unverformtem) Laserstrahl, aber die verbleibenden Instabilitäten in den aluminiumhaltigen Bauteilen bewirken nach wie vor, dass die erhaltene Schweißnaht in der Regel nicht mediendicht ist. Es kommt aufgrund der spezifischen Eigenschaften des Aluminiums im Bauteilmaterial weiterhin zu starken Turbulenzen beim Schweißen im Schmelzbad. Möglicherweise ist das Keyhole bei einem einzigen Strahl im Vergleich zum erzeugten Schmelzbad zu klein. Es entstehen insbesondere viele Poren, die dann die Schweißnaht mediendurchlässig machen.

Überraschenderweise konnten jedoch bei Verwendung einer Multifaser bzw. der 2-in-1-Technik mit mehreren Laserspots in Ringanordnung besonders stabile Keyholes beim Laserschweißen von aluminiumhaltigen Bauteilen erhalten werden. Es können im Rahmen der Erfindung größere Keyholes (im Vergleich zu einzelnen Keyholes bei einzelnen Laserspots) erreicht werden; diese sind stabiler und kollabieren nicht. Stattdessen kann die Schmelze durch die größeren Keyholes zuverlässiger verdrängt werden. Eine homogene Erstarrung der Schweißnaht kann erreicht werden.

Die Laserspot-Zentren der jeweils (in der Ringformation aufeinanderfolgenden/benachbarten) Laserspots der Ringformation können gedanklich entsprechend einem Polygon miteinander verbunden werden, in welchem eine Innenfläche (Polygonfläche) eingeschlossen ist. Im Bereich dieser Polygonfläche kann das erfindungsgemäße Tiefschweißen in den aluminiumhaltigen Bauteilen im Wesentlichen stattfinden.

Das Laserschweißen gemäß der Erfindung erzeugt ein besonders großes Schmelzevolumen, insbesondere auch vorauslaufend zu einer jeweiligen Dampfkapillare (Keyhole); insbesondere können die (bzgl. der Ringformation) nach außen gelegenen Teilbereiche der Ringanteile das Schmelzevolumen erhöhen. Die Laserspots können dabei eine gemeinsame Schmelze ausbilden. Das vorauslaufende, besonders große Schmelzevolumen kann die Dynamik der Schmelze und dadurch Turbulenzen reduzieren.

Im Rahmen der Erfindung können zudem besonders große Keyholes eingerichtet werden und die Keyhole-Geometrie ändert sich (im Vergleich zu einem Keyhole im Falle von Single-Spot), und das Absorptionsverhalten der Laserstrahlung ändert sich entsprechend. Insbesondere kann ein gemeinsames Keyhole durch alle Laserspots bzw. Teilstrahlen zusammen ausgebildet werden. Die Schmelze kann dann beim Fortschreiten des Schweißprozesses um die jeweilige Dampfkapillare herum fließen. Insgesamt kann eine besonders hohe Keyhole-Stabilität erreicht werden. Es sind hohe Schweißgeschwindigkeiten bei guter Nahtqualität möglich, und insbesondere können problemlos mediendichte Schweißnähte der aluminiumhaltigen Schweißnähte erzeugt werden, insbesondere im Stumpfstoß. Besonders bevorzugt wird dabei in ein Bauteil ein Deckel eingelegt und im Stumpfstoß geschweißt.

Durch die Anordnung von wenigstens drei Laserspots in einer Ringformation kann die Richtungsabhängigkeit des Schweißprozesses verringert werden. Mit vier oder mehr Laserspots in der Ringformation ist (bei symmetrischer Anordnung der Laserspots) der Schweißprozess bereits weitgehend richtungsunabhängig. Zudem kann die Ringformation ein gemeinsames Keyhole der aluminiumhaltigen Bauteile sehr gut stabilisieren. Die Gesamtheit der Laserspots auf der Werkstückoberfläche) wird hier als das Schweißbild bezeichnet.

Die Erzeugung der Teilstrahlen erfolgt typischerweise dadurch, dass der Ausgangslaserstrahl zwischen einer Kollimationsoptik und einer Fokussieroptik über ein oder mehrere optische Elemente geleitet wird, die zumindest in einen Teil des Strahlquerschnitts des Ausgangslaserstrahls einragen. Typische optische Elemente zu diesem Zweck sind Keilplatten; es können aber auch andere diffraktive und refraktive optische Elemente eingesetzt werden. In einer bevorzugten Variante werden zwei Bifokaleinsätze eingesetzt, die in einem Winkel von 90° zueinander angeordnet sind. Ebenso ist es möglich, als optisches Element eine Facettenplatte einzusetzen, die entsprechend der gewünschten Anzahl von Laserspots der Ringformation über ringförmig angeordnete Facetten (Außenfacetten) verfügt, die gegenüber einer Grundebene, die quer zur Strahlausbreitungsrichtung verläuft, um einen Winkel β abgewinkelt (angeschrägt) sind, typischerweise mit 0<β≤0,50°, oft β≤0,25°. Die Außenfacetten sind typischerweise zueinander um 360°/N, mit N: Anzahl der Laserspots in der Ringformation, gegeneinander um eine zentrale Achse (optische Achse der Facettenplatte, entsprechend der Strahlausbreitungsrichtung) rotiert. Falls auch ein zentraler Laserspot erwünscht ist, kann eine weitere Facette (Zentralfacette) vorgesehen sein, die parallel zur Grundebene liegt, wobei die Außenfacetten nach radial innen an die Zentralfacette angrenzen. Die Zentralfacette ist typischerweise als regelmäßiges Polygon ausgebildet. Falls kein zentraler Laserspot erwünscht ist, können die Außenfacetten radial innen einfach in einem gemeinsamen Zentralpunkt zusammenstoßen. Mit einer Facettenplatte kann eine grundsätzlich beliebige Anzahl von Laserspots erzeugt werden, entsprechend der Ausbildung der Facettenplatte.

Die Laserspots weisen typischerweise eine gleiche Größe auf. Typischerweise entfällt auf die Laserspots der Ringformation jeweils eine gleiche Laserleistung. Die Laserspots der Ringformation besitzen typischerweise bezüglich ihrer Laserspot-Zentren einen gleichen Abstand (Radius) zu einem gemeinsamen Zentrum (Schwerpunkt) der Gesamtheit der Laserspots.

Das Verfahren ist vorzugsweise dadurch gekennzeichnet, dass eine mittlere Leistungsdichte im Kernanteil höher ist als eine mittlere Leistungsdichte im Ringanteil.

Die Leistungsanteile von Kernanteil und Ringanteil bei einem jeweiligen Laserspot können über den Anteil des Ausgangslaserstrahls, der jeweils in die Kernfaser und die eine oder die mehreren Ringfasern der Multifaser eingeleitet werden, eingestellt werden. Meist ist die mittlere Leistungsdichte im Kernanteil wenigstens 2-mal, oft wenigstens 4-mal, so hoch wie im Ringanteil. Die (äußeren) Grenzen von Kernanteil und Ringanteil können bestimmt werden als der Ort, an dem die lokale Leistungsdichte geringer ist als die Hälfte der mittleren Leistungsdichte im Kernanteil oder Ringanteil, im Falle mehrerer Ringfasern im äußersten Einzelringanteil; bei näherungsweise einheitlicher Leistungsdichte innerhalb des Kernanteils und Ringanteils, bei mehreren Ringfasern des äußersten Einzelringanteils, entspricht dies einem FWHM-Kriterium. Die Durchmesser bzw. deren Verhältnisse der Kernfaser und der (äußersten) Ringfaser am abgebildeten Faserende bestimmen die Durchmesser bzw. deren Verhältnisse von Kernanteil und Ringanteil in einem jeweiligen Laserspot. Das Abbildungsverhältnis und damit die absolute Größe der Laserspots kann über die Kollimieroptik und die Fokussieroptik gewählt bzw. eingestellt werden.

Die Schweißkontur wird von den Laserspots kontinuierlich entlang ihres Verlaufs (ohne Wobbeln) abgefahren, typischerweise mit einer konstanten Vorschubgeschwindigkeit (Schweißgeschwindigkeit). Dadurch entsteht die (mediendichte) Schweißnaht. Man beachte, dass sich beim Abfahren der Schweißkontur die lokale Vorschubrichtung (Schweißrichtung) ändern kann, und dadurch auch die Orientierung des Schweißbildes zur lokalen Vorschubrichtung. Durch die erfindungsgemäße, zumindest weitgehende Richtungsunabhängigkeit des Schweißbildes sind solche Änderungen der lokalen Vorschubrichtung beim erfindungsgemäßen Verschweißen der Bauteile weitgehend unkritisch.

Die Schweißkontur kann im Stumpfstoß, als Kehlnaht oder Überlappnaht ausgebildet sein. Das Laserschweißen kann als Einschweißen betrieben werden, oder auch als Durchschweißen. Bevorzugt erfolgt das Verschweißen der aluminiumhaltigen Bauteile als Einschweißen im Überlappstoß oder Stumpfstoß, und besonders bevorzugt als Einschweißen im Stumpfstoß. Man beachte, dass der Begriff der Bauteile, die im Rahmen der vorliegenden Erfindung miteinander verschweißt werden, lokal bezüglich des Laserschweißvorgangs zu verstehen ist; entsprechend können die zu verschweißenden Bauteile vor dem Laserschweißen separat sein, oder bereits unabhängig von der zu schweißenden Verbindung miteinander verbunden sein.

Vorzugsweise wird die Schweißkontur beim zweiten Abfahren vollständig abgefahren. Hierdurch wird auf einfache Art und Weise eine vollständig mediendichte Schweißkontur erreicht und das Verfahren vereinfacht.

Die Bauteile weisen vorzugsweise wenigstens 90 Gew% Aluminium auf.

Ein Bauteil kann Aluminiumdruckguss oder eine Aluminium-Knetlegierung aufweisen. Vorzugsweise besteht ein Bauteil aus Aluminiumdruckguss oder einer Aluminium-Knetlegierung. Weiter bevorzugt besteht ein Bauteil aus Aluminiumdruckguss und das andere Bauteile aus einer Aluminium-Knetlegierung. Derlei Bauteilkombinationen sind ohne das erfindungsgemäße Verfahren praktisch nicht mediendicht auf produktive Art und Weise schweiß-verbindbar.

Als Aluminium-Knetlegierung wird vorzugsweise eine Al 1XXX, 3XXX, 5XXX, 6XXX Legierung eingesetzt.

Das zweite Abfahren soll weniger Material aufschmelzen als das erste Abfahren. Erfindungsgemäß erfolgt das zweite Abfahren daher mit geringerer Leistung und/oder höherer Vorschubgeschwindigkeit als das erste Abfahren. Das zweite Abfahren erfolgt vorzugsweise mit 2% bis 20%, insbesondere mit 5% bis 15%, besonders bevorzugt mit 8% bis 12%, weniger Leistung pro Laserspot als das erste Abfahren. Das zweite Abfahren erfolgt vorzugsweise mit 2% bis 20%, insbesondere mit 5% bis 15%, besonders bevorzugt mit 8% bis 12%, höherer Vorschubgeschwindigkeit als das erste Abfahren.

Ein lateraler Offset beim zweiten Abfahren beträgt vorzugsweise gegenüber dem ersten Abfahren weniger als 20mm, insbesondere weniger als 10mm, besonders bevorzugt weniger als 5mm.

Weiter bevorzugt werden die übrigen Parameter beim zweiten Abfahren gegenüber dem ersten Abfahren gleich gewählt. Die beim ersten Abfahren erstellte Schweißkontur wird dadurch vollständig oder nahezu vollständig aufgeschmolzen und homogenisiert.

Die Einschweißtiefe beträgt vorzugsweise weniger als 10mm. Vorzugsweise beträgt die Einschweißtiefe weniger als 4mm, insbesondere zwischen 1mm und 3mm.

Die zweifach abgefahrene Schweißkontur kann von einem optischen Sensor aufgenommen und Fehlstellen können detektiert werden. Eventuelle Fehlstellen können dadurch erkannt und behoben werden. Durch die Begutachtung der Schweißkontur kann aufwändiges Handling, insbesondere Ausspannen, Prüfung und erneutes Einspannen der Bauteile, vermieden werden.

Der optische Sensor kann in Form einer Kamera oder einer Photodiode ausgebildet sein.

Das Erstellen der Aufnahme kann im unmittelbaren Anschluss an das zweite Abfahren der Schweißkontur erfolgen. Durch das Erstellen der Aufnahme im unmittelbaren Anschluss an das zweite Abfahren der Schweißkontur kann das Prozessleuchten beim zweiten Abfahren detektiert und bewertet werden.

Der Strahlengang des optischen Sensors kann dabei koaxial zum Strahlengang des Ausgangslaserstrahls verlaufen, sodass das Verfahren konstruktiv besonders einfach umsetzbar ist.

Nach dem zweiten Abfahren kann die Schweißkontur zumindest teilweise ein drittes Mal abgefahren werden. Durch ein drittes Abfahren kann eine besonders mediendichte, vorzugsweise besonders gasdichte, Schweißverbindung geschaffen werden.

Das dritte Abfahren erfolgt vorzugsweise nur dann, wenn nach dem zweiten Abfahren zumindest eine Fehlstelle erkannt wurde.

Um das Verfahren zu vereinfachen, wird die Schweißkontur beim dritten Abfahren vorzugsweise vollständig abgefahren.

Die Einschweißtiefe wird beim dritten Abfahren vorzugsweise im Wesentlichen gleich gewählt wie beim zweiten Abfahren. In bevorzugter Ausgestaltung der Erfindung erfolgt das dritte Abfahren daher bis aus ±10%, insbesondere bis auf ±5%, besonders bevorzugt bis auf ±2%, mit denselben Parametern wie das zweite Abfahren. Das dritte Abfahren kann auch mit höherer Leistung als das zweite Abfahren erfolgen, jedoch dann vorzugsweise mit entsprechend höherer Vorschubgeschwindigkeit.

In einer besonders bevorzugten Variante des erfindungsgemäßen Verfahrens erfolgt das erste Abfahren mit gewählten Parametern, das zweite Abfahren mit geringerer Leistung, aber gleicher Vorschubgeschwindigkeit (wodurch beim zweiten Abfahren eine geringere Einschweißtiefe als beim ersten Abfahren erzielt wird) und das dritte Abfahren mit höherer Vorschubgeschwindigkeit und höherer Leistung als das zweite Abfahren (wodurch eine im Wesentlichen gleiche Einschweißtiefe wie beim zweiten Abfahren erzielt wird).

Die dreifach abgefahrene Schweißkontur kann von einem optischen Sensor aufgenommen werden und Fehlstellen können detektiert werden. Bei dem optischen Sensor handelt es sich vorzugsweise um denselben optischen Sensor, mit dem die zweifach abgefahrene Schweißkontur aufgenommen wurde. Typischerweise werden spätestens nach dem dritten Abfahren keine Fehlstellen mehr detektiert, sodass die verschweißten Bauteile durch die optische Begutachtung als Gutteil zertifiziert werden können.

Das Erstellen der Aufnahme erfolgt vorzugsweise beim dritten Abfahren der Schweißkontur. Besonders bevorzugt erfolgt das Erstellen der Aufnahme beim dritten Abfahren der Schweißkontur auf die gleiche Art und Weise wie beim zweiten Abfahren der Schweißkontur. Hierdurch können Programmieraufwand und Prozesskomplexität signifikant reduziert werden.

Bevorzugt ist eine Variante des erfindungsgemäßen Verfahrens zum Verschweißen von aluminiumhaltigen Bauteilen, die vorsieht, dass die wenigstens zwei Bauteile im Stumpfstoß miteinander verschweißt werden, und dass das Laserschweißen erfolgt
- als Einschweißen, wobei die Einschweißtiefe einer Deckeldicke oder mindestens 75% einer Deckeldicke entspricht,

Alternativ als Überlapp:
- als Einschweißen, wobei das Einschweißen in wenigstens 10% einer Bauteildicke des untersten Bauteils des Überlappstoßes erfolgt, oder
- als Durchschweißen durch alle Bauteile des Überlappstoßes. Das Verschweißen im Überlappstoß hat sich in der Praxis für die Fertigung von mediendichten Schweißnähten besonders bewährt, vor allem wenn dies als Einschweißen erfolgt. Durch das Einschweißen kann durch das Belassen von festem Material des untersten Bauteils eine zuverlässige Abdichtung eingerichtet werden.

Besonders bevorzugt ist eine Variante, bei der sich eine gemeinsame Dampfkapillare aller Laserspots in den Bauteilen ausbildet, die von einem gemeinsamen Schmelzbad umgeben ist. Die gemeinsame Dampfkapillare ist ein zusammenhängender Raum in den zu verschweißenden Bauteilen, in welchem sich Metalldampf befindet, und der von flüssiger Schmelze umgeben ist; die Dampfkapillaren der einzelnen Laserspots (wenn sie isoliert verwendet würden) vereinigen sich zu diesem zusammenhängendem Raum. Die gemeinsame Dampfkapillare (gemeinsames Keyhole) kann durch eine geeignete Verfahrensführung, insbesondere einen nicht zu großen Abstand der Laserspots der Ringformation, eingerichtet werden. Das gemeinsame Keyhole ist deutlich größer als ein Keyhole, das mit einem einzelnen Laserstrahl (Single Spot) erzeugt werden könnte. Das größere und geometrisch dann auch anders geformte Keyhole beeinflusst das Absorptionsverhalten der eingestrahlten Laserstrahlung. Mehrere Intensitätsspitzen, entsprechend den mehreren Laserspots der Ringformation, sind entsprechend der Ringformation am gemeinsamen Keyhole ringförmig verteilt angeordnet; hinzu kann weiterhin eine Intensitätsspitze eines weiteren Laserspots in der Mitte der Ringformation kommen. Ein Keyhole ist am Ort einer lokalen Intensitätsspitzen besonders stabil; durch die mehreren Intensitätsspitzen am gemeinsamen Keyhole wird eine Stabilisierung des gemeinsamen, großen Keyhole insgesamt erreicht. Im Gegensatz dazu kann bei einem Single-Spot Keyhole nur der Bereich einer einzigen Intensitätsspitze stabilisiert werden. Die gemeinsame Dampfkapillare ragt (im Falle eines Überlappstoßes) bevorzugt so tief ein, dass auch an einer Grenzfläche zwischen den überlappenden, zu verschweißenden Bauteilen der Querschnitt der gemeinsamen Dampfkapillare eine zusammenhängende Fläche bildet. Weiterhin ragt (im Allgemeinen) die gemeinsame Dampfkapillare bevorzugt so tief ein, dass die gemeinsame Dampfkapillare auf Höhe der Hälfte der maximalen Tiefe aller Teilstücke der gemeinsamen Dampfkapillare die gemeinsame Dampfkapillare im Querschnitt eine zusammenhänge Fläche bildet. Der Querschnitt wird hier senkrecht zur Strahlausbreitungsrichtung angenommen.

Bevorzugt ist eine Variante, bei der die mehreren Laserspots eine Anordnung bilden, die eine Rotationssymmetrie mit einer Zähligkeit entsprechend der Anzahl der Laserspots der Ringformation hat. Durch die Rotationssymmetrie wird eine hohe Richtungsunabhängigkeit des Laserschweißens erreicht, d.h. die relative Orientierung der Gesamtheit der Laserspots zur momentanen Vorschubrichtung spielt keine oder nur eine sehr geringe Rolle für den Schweißprozess.

In einer Variante ist vorgesehen, dass alle Laserspots die Ringformation ausbilden. Dies ist besonders einfach einzurichten, beispielsweise mit zwei Bifokaleinsätzen im Falle von vier Laserspots in der Ringformation. Insbesondere ist hier kein Laserspot in der Mitte der Ringformation vorgesehen. Im Falle von wenigen Laserspots in der Ringformation (zum Beispiel bei 3-5 Laserspots in der Ringformation) kann in der Regel auf diese Weise ein gut stabilisiertes, gemeinsames Keyhole eingerichtet werden.

In einer alternativen Variante ist ein Laserspot-Zentrum eines Laserspots in der Mitte der Ringformation angeordnet. Mit anderen Worten, die Laserspots der Ringformation werden durch einen weiteren Laserspot ergänzt, der in der Mitte der Ringformation angeordnet ist. Dadurch kann ein gemeinsames Keyhole zusätzlich stabilisiert werden, insbesondere im Falle von vielen Laserspots in der Ringformation (zum Beispiel bei 4 oder mehr, bevorzugt bei 6 oder mehr Laserspots in der Ringformation); bei vielen Laserspots in der Ringformation wird zumeist auch ein größerer Radius der Laserspot-Zentren der Laserspots der Ringformation gegenüber einem gemeinsamen Zentrum der Laserspots gewählt, um Überlappungen der Ringanteile der Laserspots zu reduzieren. Dann kann der mittlere Laserspot den Zentralbereich des gemeinsamen Keyholes stabilisieren und einem lokalen Rücksprung im Keyhole im Zentralbereich vorbeugen.

Bei einer Variante ist vorgesehen, dass die Ringformation von genau drei Laserspots gebildet wird, insbesondere wobei die Schweißkontur so verläuft, dass während des Laserschweißens zumindest überwiegend bezüglich der lokalen Vorschubrichtung
- ein Laserspot der Ringformation vorausläuft und
- zwei Laserspots der Ringformation mit gleicher Position bezüglich der lokalen Vorschubrichtung nachlaufen.

Mit drei Laserspots in der Ringformation kann bereits die Richtungsabhängigkeit gegenüber zwei (oder noch mehr) Laserspots in einer linearen Formation erheblich reduziert werden. Die bevorzugte überwiegende Ausrichtung des Schweißbilds zur lokalen Schweißrichtung/Vorschubrichtung mit einem vorauslaufenden und zwei nachlaufenden Laserspots hat sich in der Praxis bewährt.

Besonders bevorzugt ist eine Variante, bei der die Ringformation von genau vier Laserspots gebildet wird. Dadurch lässt sich bereits eine sehr weitgehende Richtungsunabhängigkeit auf einfache Weise erwirken. Die genau vier Laserspots der Ringformation sind bevorzugt quadratisch angeordnet.

In einer Weiterentwicklung dieser Variante verläuft die Schweißkontur so, dass während des Laserschweißens zumindest überwiegend bezüglich der lokalen Vorschubrichtung
- ein Laserspot der Ringformation vorausläuft,
- zwei Laserspots der Ringformation mittig mit gleicher Position bezüglich der lokalen Vorschubrichtung angeordnet sind,
- und ein Laserspot der Ringformation nachläuft.

Mit dieser überwiegend angewandten Orientierung des Schweißbildes (auch "Trapez"-Anordnung genannt) kann eine vergleichsweise breite Schweißnaht mit vier Laserspots in der Ringformation eingerichtet werden, und ein besonders großes und stabiles Schmelzbad erhalten werden.

Bevorzugt ist eine alternative Weiterentwicklung, bei der die Schweißkontur so verläuft, dass während des Laserschweißens zumindest überwiegend bezüglich der lokalen Vorschubrichtung
- zwei Laserspots der Ringformation mit gleicher Position bezüglich der lokalen Vorschubrichtung vorauslaufen,
- und zwei Laserspots der Ringformation mit gleicher Position bezüglich der lokalen Vorschubrichtung nachlaufen.

Mit dieser überwiegend angewandten Orientierung des Schweißbildes (auch "Quadrat"-Anordnung genannt) kann eine vergleichsweise schmale Schweißnaht mit vier Laserspots in der Ringformation eingerichtet werden, und dadurch ein besonders tief reichendes Aufschmelzen bei hoher Schweißgeschwindigkeit und stabilem Schmelzbad erreicht werden. Die überwiegende lokale Schweißrichtung/Vorschubrichtung kann einer der Koordinatenhauptachsen der verwendeten Laserschweißvorrichtung entsprechen. Man beachte, dass in Kurvenfahrten die Orientierung des Schweißbilds wechselt, z.B. von der Quadrat-Anordnung in die Trapez-Anordnung und wieder zurück in die Quadratanordnung beim Durchfahren einer 90°-Kurve.

In einer weiteren Variante wird die Ringformation von genau fünf Laserspots gebildet, insbesondere wobei die Schweißkontur so verläuft, dass während des Laserschweißens zumindest überwiegend bezüglich der lokalen Vorschubrichtung
- ein Laserspot der Ringformation vorausläuft,
- zwei Laserspots der Ringformation mittig mit gleicher Position bezüglich der lokalen Vorschubrichtung angeordnet sind,
- und zwei Laserspots der Ringformation mit gleicher Position bezüglich der lokalen Vorschubrichtung nachlaufen.

Diese Variante erreicht eine noch bessere Richtungsunabhängigkeit. Mit dem einen vorauslaufenden, den zwei mittigen und den zwei nachlaufenden Laserspots in der bevorzugt überwiegend angewandten Orientierung des Schweißbildes gegenüber der Vorschubrichtung wird ein besonders ruhiges Schmelzbad erreicht.

In einer weiteren Variante wird die Ringformation von genau sechs Laserspots gebildet. Zusätzlich kann ein weiterer Laserspot mittig in der Ringformation vorgesehen sein. Damit kann eine noch weitergehende Richtungsunabhängigkeit erreicht werden. Man beachte, dass eine Anzahl von 3 bis 6 Laserspots in der Ringformation im Rahmen der Erfindung bevorzugt ist; eine noch größere Anzahl bringt in der Regel nur noch geringe Verbesserungen bezüglich Richtungsunabhängigkeit oder Schmelzbadstabilität.

Besonders bevorzugt ist eine Variante, bei der die Ringanteile von in der Ringformation benachbarten Laserspots einander berührend angeordnet sind. Dadurch kann ein sehr stabiles, gemeinsames Keyhole beim Laserschweißen der aluminiumhaltigen Bauteile erreicht werden. Die Ringanteile benachbarter Laserspots der Ringformation werden als einander berührend angesehen, wenn diese Laserspots einen Abstand ihrer Laserspot-Zentren entsprechend der Summe ihrer jeweiligen halben Durchmesser ihrer Ringanteile aufweisen, mit einer Toleranz von ±10% bezogen auf diese Summe.

Bei einer alternativen Variante sind die Ringanteile von in der Ringformation benachbarten Laserspots einander überlappend angeordnet, insbesondere wobei die Kernanteile von Laserspots der Ringformation nicht mit den Ringanteilen von in der Ringformation benachbarten Laserspots überlappen. Durch die Überlappung der Ringanteile der Laserspots, insbesondere ohne Überlappung von Ringanteilen und Kernanteilen, können oftmals lokale Vorsprünge und Rücksprünge eines gemeinsamen Keyholes bezüglich der Tiefe in die zu verschweißenden Bauteile hinein verringert werden.

Bevorzugt ist eine Weiterentwicklung dieser Variante, bei der in jedem Ort maximal zwei Ringanteile von Laserspots der Ringformation miteinander überlappen. Dies hat sich für ein besonders stabiles Schmelzbad bei den aluminiumhaltigen Bauteilen bewährt.

Bevorzugt ist auch eine Weiterentwicklung, bei der die Laserspots der Ringformation ein gemeinsames Zentrum umfassen, an welchem sich die Ringanteile der

Laserspots der Ringformation einander berühren, insbesondere wobei genau vier Laserspots in der Ringformation angeordnet sind. In dieser Variante, die typischerweise ohne einen Laserspot in der Mitte der Ringformation eingerichtet wird, kann ein ruhiges und großes Keyhole mit nur geringen lokalen Vorsprüngen und Rücksprüngen in die Tiefe der zu verschweißenden Bauteile eingerichtet werden.

Vorteilhaft ist auch eine Variante, bei der in einem Zentralbereich die Ringanteile aller Laserspots der Ringformation einander überlappen, insbesondere wobei genau drei Laserspots in der Ringformation angeordnet sind. Insbesondere im Falle von nur wenigen Laserspots, etwa drei Laserspots in der Ringformation und ohne einen in der Mitte der Ringformation liegenden weiteren Laserspot, kann durch die Überlappung der Ringanteile der Laserspots der Ringanordnung in dem Zentralbereich eine Hilfs-Intensitätsspitze erzeugt werden, die ein gemeinsames Keyhole zusätzlich zu den Intensitätsspitzen der Kernanteile der Laserspots stabilisieren kann.

In einer bevorzugten Variante ist vorgesehen, dass für einen Durchmesser DK des Kernanteils und einen Durchmesser DR des Ringanteils gilt: 2≤DR/DK≤10, bevorzugt 2,5≤DR/DK≤6, besonders bevorzugt 3,5≤DR/DK≤5, und dass für einen Leistungsanteil LK des Kernanteils im Verhältnis zur Gesamtleistung in einem jeweiligen Laserspot gilt: 10%≤LK≤90%, bevorzugt 30%≤LK≤70%, besonders bevorzugt 40%≤LK≤60%. Diese Parameterbereiche haben sich für die Erfindung in der Praxis bei aluminiumhaltigen Bauteilen zur Erzielung eines stabilen Keyholes und mediendichter Schweißnähte bewährt.

Bevorzugt ist weiterhin eine Variante, die vorsieht, dass
- die Bauteile eine Bauteildicke BD mit 0,5mm≤BD≤5,0 mm aufweisen, und/oder
- die Bauteile aus Aluminiumwerkstoffen der 3000er, 5000er oder 6000er-Klasse gefertigt sind, und/oder
- die Kernanteile der Laserspots einen Durchmesser DK aufweisen mit 11µm≤DK≤200µm, bevorzugt 50µm≤DK≤150µm, und die Ringanteile der Laserspots einen Durchmesser DR aufweisen mit 50µm≤DR≤700µm, bevorzugt 200µm≤DR≤550µm, und/oder
- eine mittlere Laserleistung P des Ausgangslaserstrahls angewandt wird mit P≥2kW, bevorzugt P≥4kW, und/oder
- eine Schweißgeschwindigkeit SG angewandt wird mit SG≥5m/min, bevorzugt SG≥10m/min.

Auch diese Parameter haben sich in der Praxis zum Laserschweißen der aluminiumhaltigen Bauteile bewährt. Insbesondere kann im Rahmen der Erfindung eine besonders hohe Schweißgeschwindigkeit SG eingerichtet werden.

Weitere Vorteile der Erfindung ergeben sich aus der Beschreibung und der Zeichnung.

### Detaillierte Beschreibung der Erfindung und Zeichnung

- Fig. 1a: zeigt in einer schematischen Seitenansicht eine beispielhafte Schweißoptik, mit welcher das erfindungsgemäße Verfahren durchgeführt werden kann.
- Fig. 1b: zeigt die beispielhafte Schweißoptik aus Fig. 1a um 90° gedreht.
- Fig. 1c: zeigt eine schematische Darstellung einer beispielhaften 2-in-1-Faser für die Erfindung im Querschnitt, wie sie als Laserlichtkabel in Fig. 1a verwendet werden kann und mit der ein Ausgangslaserstrahl für das erfindungsgemäße Verfahren bereitgestellt werden kann.
- Fig. 2: zeigt das Schweißbild einer Variante des erfindungsgemäßen Verfahrens mit vier Laserspots, wie sie durch die beispielhafte Schweißoptik aus Fig. 1a erzeugt werden kann.
- Fig. 3: zeigt einen schematischen Längsschnitt zweier Bauteile während des Verschweißens mit dem Schweißbild von Fig. 2, zur Erläuterung des erfindungsgemäßen Verfahrens.
- Fig. 4: zeigt einen schematischen Querschnitt der Dampfkapillare von Fig. 3 in den dortigen Ebenen A-A, B-B und C-C.
- Fig. 5a: zeigt das Schweißbild einer Variante des erfindungsgemäßen Verfahrens, in dem die Ringanteile von vier Laserspots teilweise einander überlappend angeordnet sind und sich in einem Mittelpunkt einander berühren.
- Fig. 5b: zeigt ein Schweißbild einer Variante des erfindungsgemäßen Verfahrens, in dem die Ringanteile von drei Laserspots teilweise einander überlappend angeordnet sind.
- Fig. 5c: zeigt ein Schweißbild einer Variante des erfindungsgemäßen Verfahrens, in dem die Ringanteile von fünf Laserspots teilweise einander überlappend angeordnet sind.
- Fig. 6a: zeigt eine schematische Aufsicht auf eine beispielhafte Facettenplatte wie sie in einer Schweißoptik verwendet werden kann zur Erzeugung mehrerer Teilstrahlen für das erfindungsgemäße Verfahren.
- Fig. 6b: zeigt einen schematischen Querschnitt der beispielhaften Facettenplatte aus Fig. 6a.
- Fig. 6c: zeigt ein Schweißbild einer Variante des erfindungsgemäßen Verfahrens mit sechs Laserspots in einer Ringformation und einem zentralen Laserspot, wie es durch die beispielhafte Facettenplatte aus Fig. 6a erzeugt werden kann.
- Fig. 7: zeigt ein experimentelles Bild eines Längsschliffs von zwei aluminiumhaltigen Bauteilen nach Durchführung eines ersten Abfahrens gemäß dem erfindungsgemäßen Verfahren.
- Fig. 8: zeigt eine schematische Seitenansicht einer beispielhaften Schweißoptik mit einem optischen Sensor zur Aufnahme einer Schweißkontur.
- Fig. 9: zeigt im Stumpfstoß verschweißte Bauteile.
- Fig. 10: zeigt einen Querschliff von zwei aluminiumhaltigen Bauteilen nach Durchführung des erfindungsgemäßen Verfahrens.

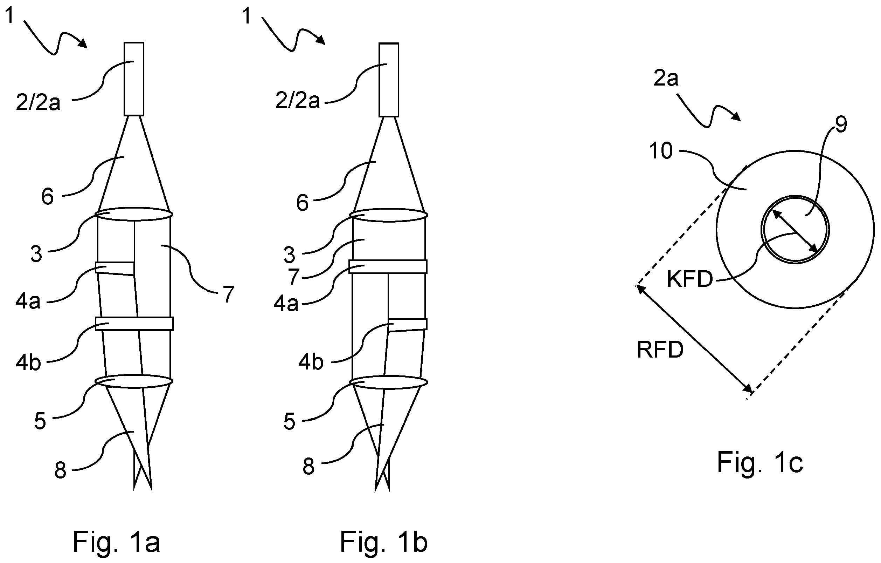

**Fig. 1a** zeigt in einer schematischen Seitenansicht eine beispielhafte Schweißoptik **1,** mit welcher das erfindungsgemäße Verfahren in einer bevorzugten Variante durchgeführt werden kann. **Fig. 1b** zeigt die Schweißoptik 1 aus Fig. 1a um 90° gedreht.

Die Schweißoptik 1 umfasst ein Laserlichtkabel **2,** welches als Multifaser, hier als 2-in-1-Faser **2a,** ausgebildet ist, eine Kollimationslinse **3,** zwei Bifokaleinsätze **4a, 4b,** welche hier als Glaskeile ausgebildet sind, und eine Fokussierlinse **5.** Die Bifokaleinsätze 4a, 4b sind hintereinander angeordnet und um 90° zueinander gedreht angeordnet.

Über das Laserlichtkabel 2 wird ein Ausgangslaserstrahl **6** bereitgestellt, der an einem Faserende des Laserlichtkabels 2 austritt. Das Faserende liegt im Fokus der Kollimationslinse 3, und der Ausgangslaserstrahl 6 wird von der Kollimationslinse 3 kollimiert, wodurch der Ausgangslaserstrahl 6 zu einem kollimierten Laserstrahl **7** wird. Der kollimierte Laserstrahl 7 wird zu den Bifokaleinsätzen 4a, 4b geführt. Die Bifokaleinsätze 4a, 4b nehmen hier jeweils etwa die Hälfte eines Querschnitts des kollimierten Laserstrahls 7 ein. Hierdurch kann der kollimierte Laserstrahl 7 in der hier gezeigten beispielhaften Schweißoptik 1 in vier Teilstrahlen **8** aufgeteilt werden. Die Teilstrahlen 8 werden durch die Fokussierlinse 5 auf eine Oberfläche eines zu verschweißenden Bauteils (nicht dargestellt) fokussiert, wodurch auf der Oberfläche des Bauteils ein Schweißbild aus hier vier gleich großen Laserspots erzeugt wird.

Als mittlere Laserleistung P des Ausgangslaserstrahls 6 kann beispielsweise P ≥ 2 kW, bevorzugt P ≥ 4 kW gewählt werden.

**Fig. 1c** zeigt beispielhaft einen Querschnitt der 2-in-1-Faser 2a, mit der der Ausgangslaserstrahl für das erfindungsgemäße Verfahren bereitgestellt werden kann.

Die 2-in-1-Faser 2a weist eine Kernfaser **9** mit einem Kernfaserdurchmesser **KFD** und eine Ringfaser **10** mit einem Ringfaserdurchmesser **RFD** auf. Typischerweise kann für den Kernfaserdurchmesser KFD beispielsweise 11 µm ≤ KFD ≤ 200 µm, bevorzugt 30 µm ≤ KFD ≤ 150 µm, gewählt werden und für den Ringfaserdurchmesser RFD beispielsweise 30 µm ≤ RFD ≤ 700 µm, bevorzugt 100 µm ≤ RFD ≤ 550 µm gewählt werden. Das Abbildungsverhältnis der Schweißoptik (vgl. Fig. 1a), die die 2-in-1-Faser umfasst, ist in der Ausführungsform 1:1 gewählt; in anderen Ausführungsformen kann beispielsweise auch ein Abbildungsverhältnis > 1:1 gewählt werden.

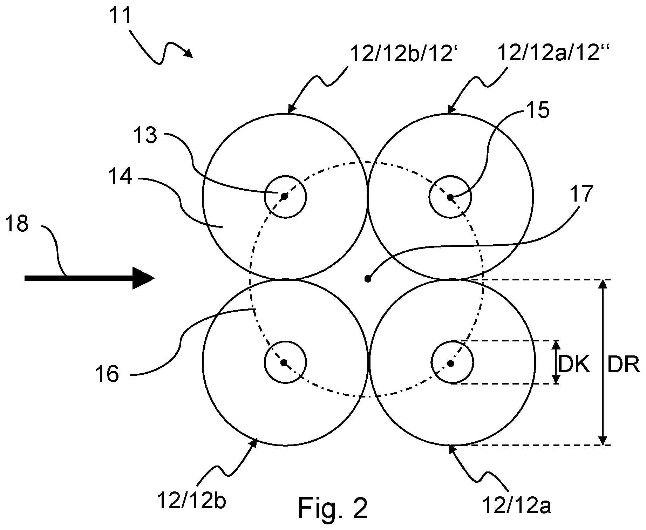

Mit der 2-in-1-Faser kann ein Laserstrahl erzeugt werden, der einen Kernanteil und einen Ringanteil aufweist (siehe hierzu z.B. Fig. 2 bezüglich der Laserspots) und als Ausgangslaserstrahl in der Schweißoptik dient (vgl. Fig. 1a). Hierzu wird ein Ursprungslaserstrahl (nicht näher gezeigt) teilweise in die Kernfaser 9 und teilweise in die Ringfaser 10 eingespeist, beispielsweise über einen teilweise in den Ursprungslaserstrahl eingeschobenen optischen Keil (nicht näher dargestellt).

In **Fig. 2** ist eine schematische Darstellung eines Schweißbildes **11** auf der Oberfläche eines zu verschweißenden Bauteils gezeigt, wie es durch die beispielhafte Schweißoptik aus Fig. 1a erzeugt werden kann.

Das Schweißbild 11 umfasst hier vier gleich große Laserspots **12.** Die vier Laserspots 12 weisen jeweils einen Kernanteil **13** und einen Ringanteil **14** auf, da der Ausgangslaserstrahl durch die 2-in-1-Faser erzeugt wird und dementsprechend bereits seinerseits einen Kernanteil und einen Ringanteil aufweist.

Jeder Laserspot 14 hat ein Laserspot-Zentrum **15.** Der Kernanteil 13 hat hier einen Durchmesser DK von 100 µm und der Ringanteil 14 hat hier einen Durchmesser DR von 400 µm. Das Verhältnis DR/DK ist dementsprechend 4.

Für einen Leistungsanteil LK des Kernanteils 13 eines einzelnen Laserspots 12 kann LK = 50% gewählt werden. In der hier gezeigten Variante weist der Ringanteil 14 eine ca. 15-fach größere Fläche auf als der Kernanteil 13. Eine mittlere Leistungsdichte im Kernanteil 13 ist dann hier etwa 15 mal größer als eine mittlere Leistungsdichte im Ringanteil 14.

Die Laserspots 12 sind in einer Ringformation **16** angeordnet; durch die Laserspot-Zentren 15 können die Eckpunkte eines Polygons (hier eines Quadrats) definiert werden, das eine Innenfläche einschließt. Der Abstand zwischen zwei Laserspot-Zentren 15 von nebeneinanderliegenden, in der Ringformation 16 benachbarten Laserspots 12 (z.B. der Laserspot-Zentren 15 der Laserspots 12' und 12") beträgt hier 400 µm. In der hier gezeigten Variante berühren sich die Ringanteile 14 der in der Ringformation 16 benachbarten Laserspots 12 genau. Der Abstand der Laserspot-Zentren 15 der in der Ringformation 16 benachbarten Laserspots 12 entspricht der Summe der jeweils halben Durchmesser DR der Ringanteile 14 der beteiligten Laserspots 12.

Das Schweißbild 11 weist hier eine vierzählige Rotationssymmetrie auf, da die Ringformation 16 durch vier Laserspots 12 ausgebildet wird, die durch Drehung um 90° um ein gemeinsames Zentrum (Schwerpunkt) **17** ineinander überführt werden können. Die Laserspot-Zentren 15 der Laserspots 12 der Ringformation 16 liegen hier auf einer Kreislinie (strichpunktiert dargestellt) um das gemeinsame Zentrum 17.

Bezüglich einer lokalen Vorschubrichtung **18** ist das Schweißbild 11 so angeordnet, dass zwei Laserspots **12a** vorauslaufen und zwei Laserspots **12b** nachlaufen.

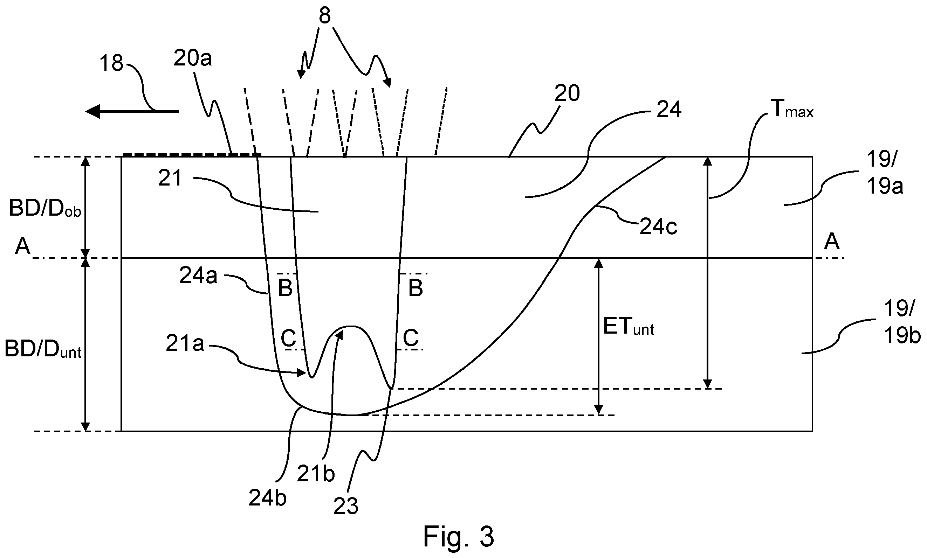

**Fig.** 3 zeigt einen schematischen Längsschnitt zweier Bauteile **19** während des Verschweißens mit einem Schweißbild wie in Fig. 2 dargestellt, zur Erläuterung des erfindungsgemäßen Verfahrens in einer bevorzugten Variante. Bei der Fügesituation der zwei Bauteile 19 handelt es sich um einen Überlappstoß. Alternativ und hier nicht gezeigt kann es sich bei der Fügesituation der zwei Bauteile 19 auch um einen Stumpfstoß handeln.

Die Bauteile 19 sind aus einem Aluminiumwerkstoff gefertigt. Ein oberes Bauteil **19a** weist hier eine Bauteildicke **BD** bzw. Dicke **D_{ob}** von etwa 2 mm auf. Ein unterstes Bauteil **19b** weist hier eine Bauteildicke BD bzw. Dicke **Dᵤₙₜ** von etwa 3 mm auf. Das Verschweißen erfolgt hier als Einschweißen. Der Längsschnitt ist zentral durch zwei bezüglich der Vorschubrichtung 18 nebeneinander liegende Laserspots gewählt.

Die im Längsschnitt von Fig. 3 enthaltenen Teilstrahlen 8 werden von der Schweißoptik aus (nicht gezeigt) auf die Oberfläche **20** des oberen Bauteils 19a gerichtet. Die Teilstrahlen 8 dringen von der Oberfläche 20 aus in die Bauteile 19 ein und verdampfen in ihrer unmittelbaren Umgebung den Aluminiumwerkstoff. Es bildet sich durch die Wirkung aller Teilstrahlen 8 bzw. aller Laserspots eine gemeinsame Dampfkapillare **21** (auch gemeinsames Keyhole oder gemeinsame Metalldampfkapillare genannt), die bis in das unterstes Bauteil 19b reicht. Die gemeinsame Dampfkapillare 21 bildet in den Bauteilen 19 ein zusammenhängendes Volumen aus. In den Bereichen nahe der Kernanteile der Teilstrahlen 8 weist die gemeinsame Dampfkapillare 21 tiefer reichende Teilstücke **21a** ("Vorsprünge") aus. In einem Bereich zwischen den Teilstrahlen 8 weist die gemeinsame Dampfkapillare 21 ein weniger tief reichendes Teilstück **21b** auf ("Rücksprung"). Eine maximale Tiefe **Tₘₐₓ** der gemeinsamen Dampfkapillare 21 an einem untersten Punkt **23** beträgt hier ca. 4 mm.

Durch die Kombination der 2-in-1-Technik mit mehreren Laserspots, die durch die Teilstrahlen 8 erzeugt werden, ist die gemeinsame Dampfkapillare 21 besonders stabil.

In der Umgebung der gemeinsamen Dampfkapillare 21 wird der Aluminiumwerkstoff aufgeschmolzen, wodurch sich ein Schmelzbad **24** von flüssigem Aluminiumwerkstoff bildet. Da die Teilstrahlen 8 beim Verschweißen relativ zu den Bauteilen 19 in Vorschubrichtung 18 entlang einer Schweißkontur **20a** bewegt werden, in der hier gezeigten Darstellung nach links, ist das Schmelzbad 24 im Querschnitt nach rechts ausgesackt. An einer linken Kante **24a** und an einer unteren Kante **24b** des Schmelzbades 24 wird Aluminiumwerkstoff aufgeschmolzen, während an einer rechten Kante **24c** des Schmelzbades 24 Aluminiumwerkstoff wieder erstarrt.

Das Einschweißen in das unterste Bauteil 19b erfolgt bis in eine Einschweißtiefe ETᵤₙₜ, die im gezeigten Fall ca. 85% der Bauteildicke Dᵤₙₜ beträgt. Auf diese Weise kann eine gute und mediendichte Verschweißung erzielt werden. In einer nicht gezeigten Variante ist es ebenso möglich, dass das Laserschweißen als Durchschweißen durch alle Bauteile 19 des Überlappstoßes erfolgt.

Als Aluminiumwerkstoffe für die Bauteile 19 können Werkstoffe der 3000er, der 5000er oder der 6000er-Klasse gewählt werden. Als eine Schweißgeschwindigkeit SG kann SG≥5 m/min, bevorzugt SG≥10 m/min gewählt werden.

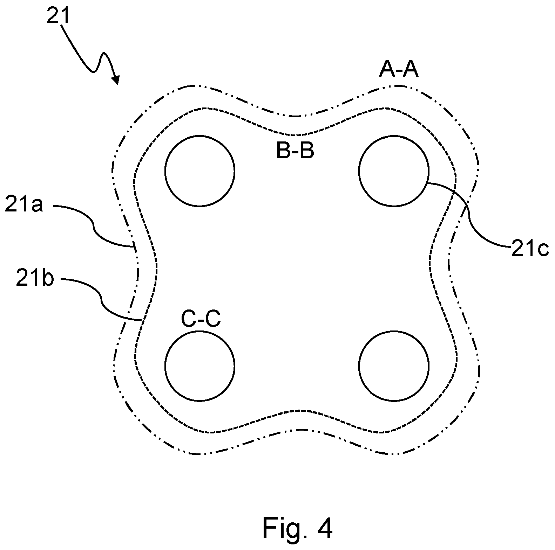

In **Fig. 4** sind schematische Querschnitte der Dampfkapillare 21 von Fig. 3 in den dortigen Ebenen A-A, B-B und C-C gezeigt.

Die strichpunktierte Linie zeigt einen Umriss **21a** der Dampfkapillare 21 in der Ebene A-A von Fig. 3, die in der Grenzfläche des oberen und unteren Bauteils liegt, also in einer Tiefe von ca. 2 mm. Die Dampfkapillare 21 bildet hier eine zusammenhängende Fläche aus.

Die gestrichelte Linie zeigt einen Umriss **21b** der Dampfkapillare 21 in der Ebene B-B von Fig. 3, die bei einer Tiefe entsprechend der Hälfte der maximalen Tiefe Tₘₐₓ der gemeinsamen Dampfkapillare entspricht, hier bei ca. 2,5 mm Tiefe. Die Dampfkapillare 21 bildet hier eine etwas kleinere, aber immer noch zusammenhängende Fläche aus.

Mit durchgehender Linie ist einen Umriss **21c** der Dampfkapillare 21 in etwa 3,8 mm Tiefe der Dampfkapillare 21 in der Ebene C-C von Fig. 3 gezeigt. Die Dampfkapillare bildet in dieser Tiefe im Querschnitt vier separate (nicht zusammenhängende) Teilbereiche aus, die jeweils näherungsweise kreisförmig ausgebildet sind. Die Ebene C-C schneidet die Dampfkapillare also nur noch im Bereich der lokalen Vorsprünge.

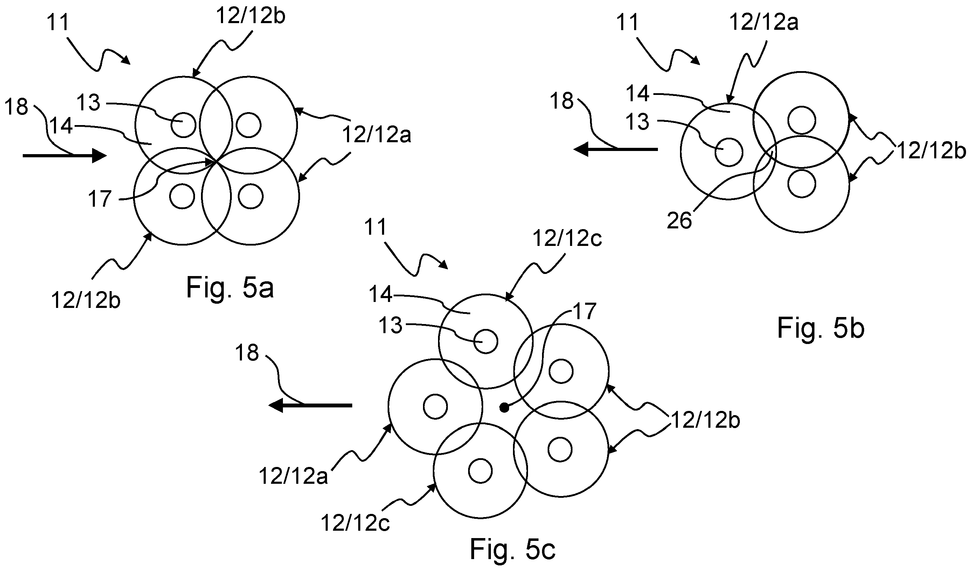

In **Fig. 5a** ist eine schematische Darstellung eines Schweißbildes 11 im Querschnitt gezeigt mit vier Laserspots 12 in Ringformation, für eine weitere Variante der Erfindung.

Die Laserspots 12 sind hier alle gleich groß. Der Kernanteil 13 hat hier einen Durchmesser DK von 100 µm und der Ringanteil 14 hat hier einen Durchmesser DR von 400 µm. Das Verhältnis DR/DK ist dementsprechend 4.

Der Abstand zwischen zwei (diagonal) gegenüberliegenden Laserspot-Zentren der Laserspots 12 beträgt hier 400 µm. In der hier gezeigten Variante berühren sich die Ringanteile 14 der gegenüberliegenden Laserspots 12 genau im gemeinsamen Zentrum 17. Die benachbarten Laserspots 12 sind einander überlappend angeordnet. Die Kernanteile 13 überlappen jeweils nicht. Das Schweißbild 11 weist hier eine vierzählige Rotationssymmetrie auf, da die Ringformation durch vier Laserspots 12 ausgebildet wird, die durch Drehung um 90° um das gemeinsame Zentrum 17 ineinander überführt werden können.

Bezüglich der eingezeichneten lokalen Vorschubrichtung 18 ist das Schweißbild 11 so angeordnet, dass die zwei Laserspots 12a vorauslaufen und die zwei Laserspots 12b nachlaufen. Die beiden Laserspots 12a befinden sich bezüglich der lokalen Vorschubrichtung 18 an identischen Positionen. Ebenso befinden sich die beiden Laserspots 12b bezüglich der lokalen Vorschubrichtung 18 an identischen Positionen.

In **Fig. 5b** ist eine schematische Darstellung eines Schweißbildes 11 im Querschnitt gezeigt mit drei Laserspots 12 in Ringformation, in einer weiteren Variante der Erfindung.

Die Laserspots 12 sind hier alle gleich groß. Der Kernanteil 13 hat hier einen Durchmesser DK von 300 µm und der Ringanteil 14 hat hier einen Durchmesser DR von 800 µm. Das Verhältnis DR/DK ist dementsprechend 2,67.

Die benachbarten Laserspots 12 sind bezüglich der Ringanteile 14 einander überlappend angeordnet und in einem Zentralbereich **26** überlappen sich alle drei Laserspots 12 in den Ringanteilen 14. Die Kernanteile 13 überlappen jeweils nicht.

Bezüglich der gezeigten lokalen Vorschubrichtung 18 ist das Schweißbild 11 so angeordnet, dass ein Laserspot 12a vorausläuft und zwei Laserspots 12b nachlaufen. Die beiden Laserspots 12b befinden sich bezüglich der lokalen Vorschubrichtung 18 an identischen Positionen. Die Laserspots 12b sind hier zueinander etwas geringer beabstandet als der vorauslaufende Laserspot 12a zu jedem der nachlaufenden Laserspots 12b (jeweils bezogen auf die Laserspot-Zentren).

In **Fig. 5c** ist eine schematische Darstellung eines Schweißbildes 11 im Querschnitt gezeigt mit fünf Laserspots 12 in Ringformation, in einer weiteren Variante der Erfindung.

Die Laserspots 12 sind hier alle gleich groß. Der Kernanteil 13 hat hier einen Durchmesser DK von 100 µm und der Ringanteil 14 hat hier einen Durchmesser DR von 400 µm. Das Verhältnis DR/DK ist dementsprechend 4.

Der Abstand zwischen zwei in der Ringformation benachbarten Laserspot-Zentren 15 der Laserspots 12 beträgt hier ungefähr 350 µm. In der hier gezeigten Variante sind die in der Ringformation benachbarten Laserspots 12 mit den Ringanteilen 14 einander überlappend angeordnet. Das Schweißbild 11 weist hier eine fünfzählige Rotationssymmetrie auf, da die Ringformation durch fünf Laserspots 12 ausgebildet wird, die durch Drehung um 72° um das gemeinsame Zentrum 17 ineinander überführt werden können.

Bezüglich der gezeigten lokalen Vorschubrichtung 18 ist das Schweißbild 11 so angeordnet, dass ein Laserspot 12a vorausläuft, zwei Laserspots 12b nachlaufen, und zwei Laserspots **12c** mittig zwischen den Laserspots 12a, 12b angeordnet sind. Die beiden nachlaufenden Laserspots 12b befinden sich bezüglich der lokalen Vorschubrichtung 18 an identischen Positionen. Ebenso befinden sich die beiden mittleren Laserspots 12c bezüglich der lokalen Vorschubrichtung 18 an identischen Positionen.

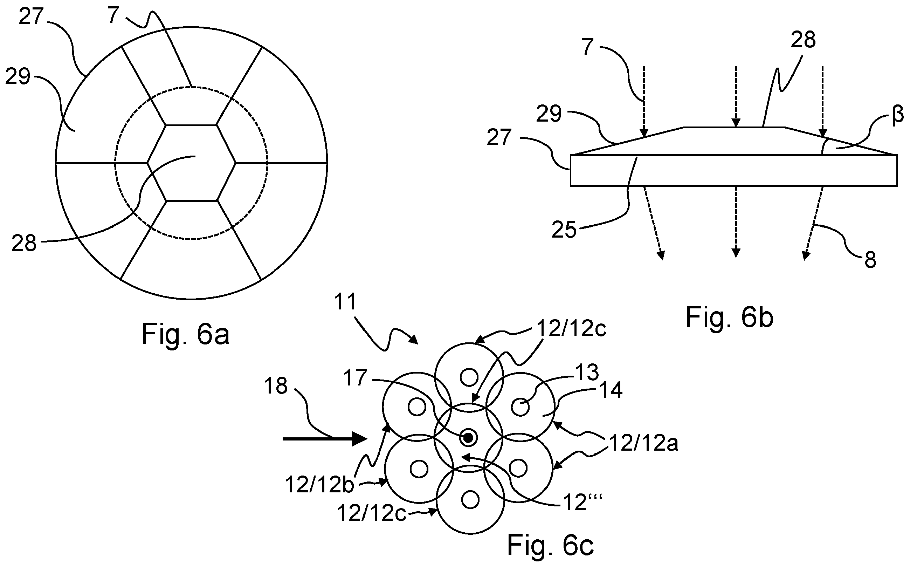

**Fig. 6a** zeigt eine schematische Aufsicht auf eine beispielhafte Facettenplatte **27,** wie sie in einer Schweißoptik verwendet werden kann, zur Erzeugung mehrerer Teilstrahlen für das erfindungsgemäße Verfahren.

Die Facettenplatte 27 umfasst in der hier gezeigten Form eine regelmäßig sechseckige zentrale Facette **28** ("Zentralfacette"). Die Facettenplatte 27 umfasst und dieser herum angeordnet sechs äußere Facetten **29** ("Außenfacetten"). Auf die Facettenplatte 27 wird der kollimierte Laserstrahl 7 eingestrahlt.

**Fig. 6b** zeigt einen schematischen Querschnitt der beispielhaften Facettenplatte 27 aus Fig. 6a.

Die äußeren Facetten 29 sind keilförmig ausgebildet. Ein Facettenwinkel β beträgt hier etwa 0,15°, gemessen gegenüber einer Grundebene 25, die senkrecht zur Einstrahlrichtung des kollimierten Laserstrahls 7 liegt. Der kollimierte Laserstrahl 7 wird auf die Facettenplatte 27 eingestrahlt. Im Bereich der zentralen Facette 28 erfolgt keine Ablenkung des kollimierten Laserstrahls 7. In den Bereichen der sechs äußeren Facetten 29 wird der kollimierte Laserstrahl 7 abgelenkt (gebrochen). Somit ergeben sich ein unabgelenkter Teilstrahl 8 und sechs abgelenkte Teilstrahlen 8.

**Fig. 6c** zeigt ein Schweißbild 11 einer Variante des erfindungsgemäßen Verfahrens mit sechs Laserspots 12 in einer Ringformation und einem zentralen Laserspot 12, wie sie durch die beispielhafte Facettenplatte 27 aus Fig. 6a erzeugt werden kann. Der zentrale Laserspot 12 wird hier auch mit 12‴ bezeichnet.

Die Laserspots 12 sind hier alle gleich groß. Der Kernanteil 13 hat hier einen Durchmesser DK von 100 µm und der Ringanteil 14 hat hier einen Durchmesser DR von 400 µm. Das Verhältnis DR/DK ist dementsprechend 4.

Der Abstand zwischen zwei in der Ringformation benachbarten Laserspot-Zentren 15 der Laserspots 12 beträgt hier ungefähr 350 µm. In der hier gezeigten Variante sind die in der Ringformation benachbarten Laserspots 12 mit den Ringanteilen 14 einander überlappend angeordnet. Der zentrale Laserspot 12‴ ist mit allen anderen Laserspots 12 bezüglich der Ringanteile 14 überlappend angeordnet. Die Kernanteile 13 überlappen jeweils nicht. Das Schweißbild 11 weist hier eine sechszählige Rotationssymmetrie auf, da die Ringformation durch sechs Laserspots 12 ausgebildet wird, die durch Drehung um 60° um das gemeinsame Zentrum 17 ineinander überführt werden können; der zentrale Laserspot 12‴ bleibt von der Rotation unberührt, da sein Laserspot-Zentrum mit dem gemeinsamen Zentrum 17 zusammenfällt.

Bezüglich der lokalen Vorschubrichtung 18 ist das Schweißbild 11 so angeordnet, dass die zwei Laserspots 12a vorauslaufen, die zwei Laserspots 12b nachlaufen, und die drei Laserspots 12c mittig zwischen den Laserspots 12a, 12b angeordnet sind.

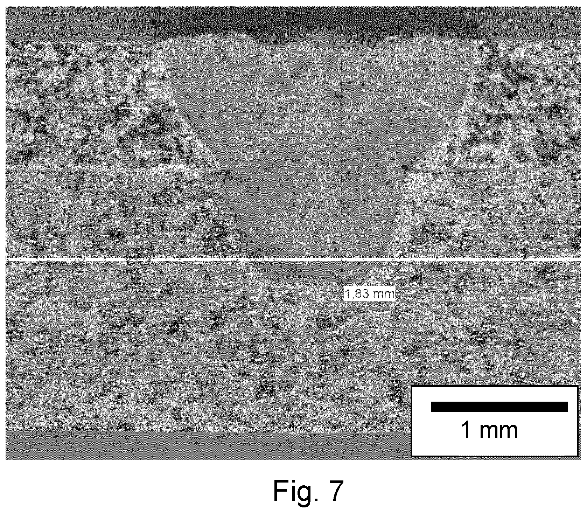

**Fig. 7** zeigt ein experimentelles Bild von zwei aluminiumhaltigen Bauteilen, die bei Durchführung einer Variante des erfindungsgemäßen Verfahrens im Überlappstoß miteinander verschweißt wurden. Es wurde ein Querschliff gefertigt und im Lichtmikroskop fotografiert.

Das obere Bauteil hat eine Bauteildicke von ca. 1 mm, und das untere Bauteil hat eine Bauteildicke von ca. 2 mm. Die Verschweißung erfolgte durch Einschweißen zu ca. 40% in das untere Bauteil; die Schweißrichtung war senkrecht zur Zeichenebene. Es wurde eine praktisch porenfreie, mediendichte Schweißnaht erhalten.

Im vorliegenden Beispiel wurde das Schweißbild von Fig. 2 (siehe oben) angewandt, mit vier Laserspots in quadratischer, einander berührender Anordnung. Es wurde eine (gesamte) mittlere Laserleistung P = 3 kW und eine Schweißgeschwindigkeit SG = 5m/min gewählt. Der Leistungsanteil im Kern betrug 70%, der Kerndurchmesser DK war 100 µm, und der Ringdurchmesser DR war 400 µm für jeden Laserspot. Die aluminiumhaltigen Bauteile waren aus der Aluminiumlegierung AW-5083 gefertigt.

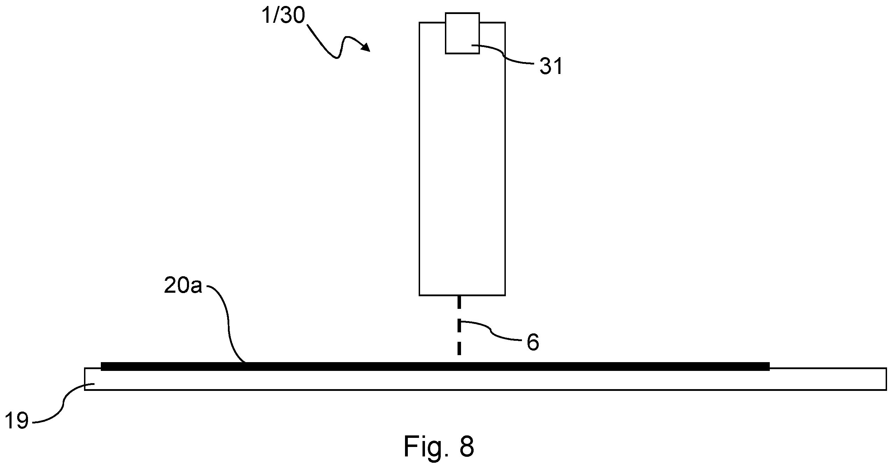

**Fig. 8** zeigt eine Vorrichtung 30 mit einer Schweißoptik 1 zum Schweißen von Bauteilen 19 bzw. zum Erzeugen einer Schweißkontur 20a. Die Schweißkontur 20a wird erfindungsgemäß mehrfach abgefahren, insbesondere mehrfach vollständig abgefahren. Nach oder - bevorzugt - während des Abfahrens kann durch einen optischen Sensor 31 bestimmt werden, ob ein weiteres Abfahren nötig ist. Der optische Sensor 31 ist vorzugsweise koaxial zum Strahlengang von Teilstrahlen 8 angeordnet.

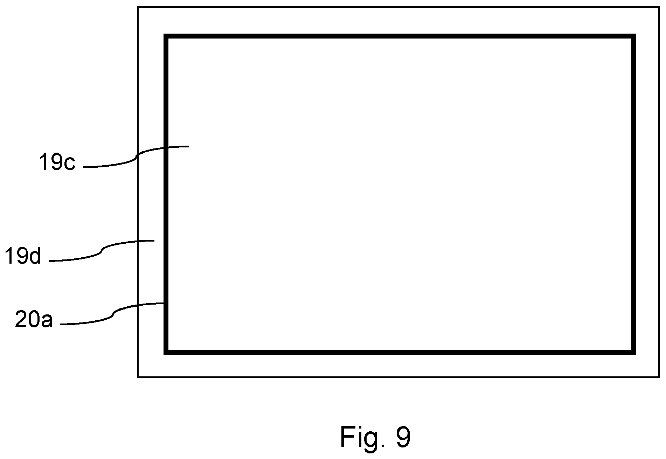

**Fig. 9** zeigt verschweißte Bauteile, wobei eine Schweißkontur 20a im Stumpfstoß erstellt wurde. Vor dem Schweißen wurde ein deckelförmiges Bauteil **19c** in das andere gefäßförmige Bauteil **19d** eingelegt.

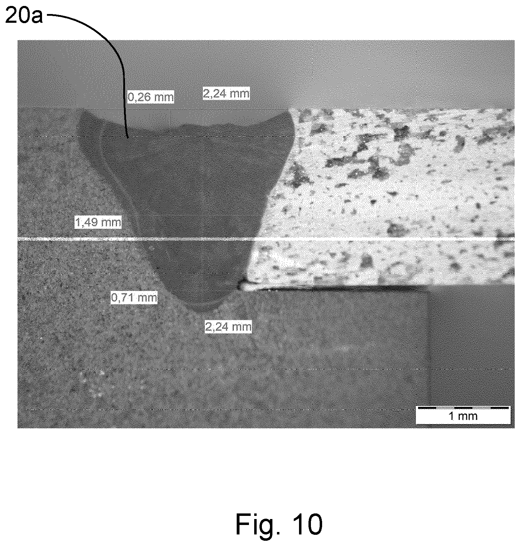

**Fig. 10** zeigt einen Querschliff zweier verschweißter Bauteile, wobei aus der Schweißkontur 20a ein zweifaches Abfahren ersichtlich ist.

### Bezugszeichenliste

- 1: Schweißoptik
- 2: Laserlichtkabel
- 2a: 2-1-Faser
- 3: Kollimationslinse
- 4a, 4b: Bifokaleinsätze
- 5: Fokussierlinse
- 6: Ausgangslaserstrahl
- 7: kollimierter Laserstrahl
- 8: Teilstrahl
- 9: Kernfaser
- 10: Ringfaser
- 11: Schweißbild
- 12: Laserspot
- 12': Laserspot benachbart zu Laserspot 12"
- 12": Laserspot benachbart zu Laserspot 12'
- 12‴: zentraler Laserspot
- 12a: vorlaufender Laserspot
- 12b: nachlaufender Laserspot
- 12c: mittiger Laserspot
- 13: Kernanteil
- 14: Ringanteil
- 15: Laserspot-Zentrum
- 16: Ringformation
- 17: gemeinsames Zentrum
- 18: Vorschubrichtung
- 19: Bauteil
- 19a: oberes Bauteil
- 19b: unterstes Bauteil
- 19c: deckelförmiges Bauteil
- 19d: gefäßförmiges Bauteil
- 20: Oberfläche
- 20a: Schweißkontur
- 21: Dampfkapillare
- 21a: Vorsprung
- 21b: Rücksprung
- 23: unterster Punkt
- 24: Schmelzbad
- 24a: linke Kante
- 24b: untere Kante
- 24c: rechte Kante
- 25: Grundebene
- 26: Zentralbereich
- 27: Facettenplatte
- 28: zentrale Facette
- 29: äußere Facetten
- 30: Vorrichtung
- 31: optischer Sensor
- β: Facettenwinkel
- BD: Bauteildicke
- DK: Durchmesser Kernanteil
- D_{ob}: Bauteildicke oberes Bauteil
- DR: Durchmesser Ringanteil
- Dᵤₙₜ: Bauteildicke unterstes Bauteil
- ETᵤₙₜ: Einschweißtiefe in das unterste Bauteil
- KFD: Kernfaserdurchmesser
- RFD: Ringfaserdurchmesser
- Tₘₐₓ: maximale Tiefe der Dampfkapillare

## Patentansprüche

1. Verfahren zum Verschweißen von wenigstens zwei aluminiumhaltigen Bauteilen (19),
wobei die Bauteile (19) jeweils einen Gehalt von wenigstens 75 Gew% Aluminium aufweisen,
wobei das Verschweißen als Laserschweißen im Tiefschweißregime erfolgt, wobei ein Ausgangslaserstrahl (6) auf mehrere Teilstrahlen (8) aufgeteilt wird, die auf die Bauteile (19) gerichtet werden, sodass an einer Oberfläche (20) der Bauteile (19) mehrere Laserspots (12) erzeugt werden, wobei die mehreren Laserspots (12) an der Oberfläche (20) der Bauteile (19) eine Schweißkontur (20a) abfahren,
und wobei Laserspot-Zentren (15) von wenigstens drei Laserspots (12) der mehreren Laserspots (12) in einer Ringformation (16) angeordnet sind,
**dadurch gekennzeichnet,**
**dass** der Ausgangslaserstrahl (6) mittels einer Multifaser, bevorzugt einer 2-in-1-Faser (2a), erzeugt wird, sodass die mehreren Laserspots (12) an der Oberfläche (20) der Bauteile (19) jeweils einen Kernanteil (13) und einen Ringanteil (14) aufweisen, wobei nach einem ersten Abfahren der Schweißkontur (20a) die Schweißkontur (20a) zumindest teilweise ein zweites Mal abgefahren wird, wobei das zweite Abfahren mit geringerer Leistung und/oder höherer Vorschubgeschwindigkeit als das erste Abfahren erfolgt.

2. Verfahren nach Anspruch 1, **dadurch gekennzeichnet,**
**dass** ein Bauteil (19) Aluminiumdruckguss oder eine Aluminium-Knetlegierung aufweist.

3. Verfahren nach einem der vorhergehenden Ansprüche, **dadurch gekennzeichnet,**
**dass** die Einschweißtiefe (ETᵤₙₜ)weniger als 10mm beträgt.

4. Verfahren nach einem der vorhergehenden Ansprüche, **dadurch gekennzeichnet,**
**dass** die zweifach abgefahrene Schweißkontur (20a) von einem optischen Sensor (31) aufgenommen wird und Fehlstellen detektiert werden.

5. Verfahren nach Anspruch 4, **dadurch gekennzeichnet,**
**dass** das Erstellen der Aufnahme beim zweiten Abfahren der Schweißkontur (20a) erfolgt.

6. Verfahren nach einem der vorhergehenden Ansprüche, **dadurch gekennzeichnet,**
**dass** nach dem zweiten Abfahren der Schweißkontur (20a) die Schweißkontur (20a) zumindest teilweise ein drittes Mal abgefahren wird.

7. Verfahren nach Anspruch 6, **dadurch gekennzeichnet,**
**dass** die dreifach abgefahrene Schweißkontur (20a) von einem optischen Sensor (31) aufgenommen wird und Fehlstellen detektiert werden.

8. Verfahren nach Anspruch 7, **dadurch gekennzeichnet,**
**dass** das Erstellen der Aufnahme beim dritten Abfahren der Schweißkontur (20a) erfolgt.

## Claims

1. A method for welding at least two aluminium-containing components (19),
wherein each of the components (19) has a content of at least 75 wt% aluminium, wherein the welding takes place as laser welding in the deep penetration welding regime,
wherein an output laser beam (6) is subdivided into a plurality of partial beams (8) that are directed onto the components (19) such that a plurality of laser spots (12) are produced on the surface (20) of the components (19),
wherein the plurality of laser spots (12) on the surface (20) of the components (19) traverse a welding contour (20a),
and wherein laser spot centres (15) of at least three laser spots (12) of the plurality of laser spots (12) are arranged in a ring formation (16),
**characterized in that**
the output laser beam (6) is produced by means of a multi-fibre, preferably a 2-in-1 fibre (2a), such that each of the plurality of laser spots (12) on the surface (20) of the components (19) has a core portion (13) and a ring portion (14), wherein after a first traversing of the welding contour (20a), the welding contour (20a) is traversed at least partially a second time, wherein the second traversing takes place at a lower power and/or higher advancement speed than the first traversing.

2. The method according to claim 1, **characterized in that**
one component (19) has die cast aluminium or a wrought aluminium alloy.

3. The method according to one of the preceding claims, **characterized in that**,
the weld penetration depth (ETᵤₙₜ) is less than 10mm.

4. The method according to one of the preceding claims, **characterized in that**,
the doubly traversed welding contour (20a) is recorded by an optical sensor (31), and defects are detected.

5. The method according to claim 4, **characterized in that**
the creation of the recording takes place during the second traversing of the welding contour (20a).

6. The method according to one of the preceding claims, **characterized in that**,
after the second traversing of the welding contour (20a), the welding contour (20a) is traversed a third time, at least partially.

7. The method according to claim 6, **characterized in that**
the triply traversed welding contour (20a) is recorded by an optical sensor (31), and defects are detected.

8. The method according to claim 7, **characterized in that**
the creation of the recording takes place during the third traversing of the welding contour (20a).

## Revendications

1. Procédé de soudage d'au moins deux composants (19) contenant de l'aluminium, dans lequel les composants (19) ont chacun une teneur d'au moins 75 % en masse d'aluminium,
dans lequel le soudage est effectué par laser en régime de soudage à pénétration profonde, dans lequel un faisceau laser de sortie (6) est divisé en de multiples faisceaux partiels (8) qui sont dirigés vers les composants (19) de sorte que de multiples points laser (12) sont générés sur une surface (20) des composants (19), dans lequel les multiples points laser (12) tracent un contour de soudage (20a) sur la surface (20) des composants (19),
et dans lequel les centres des points laser (15) d'au moins trois points laser (12) parmi les multiples points laser (12) sont agencés selon une formation annulaire (16),
**caractérisé en ce que**
le faisceau laser de sortie (6) est généré au moyen d'une fibre multiple, de préférence une fibre 2-en-1 (2a), de sorte que les multiples points laser (12) sur la surface (20) des composants (19) comportent chacun une partie centrale (13) et une partie annulaire (14), dans lequel, après un premier traçage du contour de soudage (20a), le contour de soudage (20a) est tracé au moins partiellement une deuxième fois, dans lequel le deuxième traçage est effectué avec une puissance inférieure et/ou une vitesse d'avance supérieure à celles du premier traçage.

2. Procédé selon la revendication 1, **caractérisé en ce que**
un composant (19) est constitué d'aluminium moulé sous pression ou d'un alliage d'aluminium corroyé.

3. Procédé selon l'une quelconque des revendications précédentes, **caractérisé en ce que**
la profondeur de pénétration de la soudure (ETᵤₙₜ) est inférieure à 10 mm.

4. Procédé selon l'une quelconque des revendications précédentes, **caractérisé en ce que**
le contour de soudage (20a) tracé deux fois est enregistré par un capteur optique (31) et que les défauts sont détectés.

5. Procédé selon la revendication 4, **caractérisé en ce que**
l'enregistrement est effectué lors du deuxième traçage du contour de soudage (20a).

6. Procédé selon l'une quelconque des revendications précédentes, **caractérisé en ce que**
après le deuxième traçage du contour de soudage (20a), le contour de soudage (20a) est au moins partiellement tracé une troisième fois.

7. Procédé selon la revendication 6, **caractérisé en ce que**
le contour de soudage (20a) tracé trois fois est enregistré par un capteur optique (31) et que les défauts sont détectés.

8. Procédé selon la revendication 7, **caractérisé en ce que**
l'enregistrement est effectué lors du troisième traçage du contour de soudage (20a).
